# EUROPEAN PATENT SPECIFICATION

(11) **EP 0 496 489 B1**
(45) Date of publication and mention of the grant of the patent: **13.12.1995**
(21) Application number: 92300067.3
(22) Date of filing: 06.01.1992
(51) Int. Cl.: G01M 17/02

(54) **Tyre holding fixture for tyre processing machine**
Reifenspannvorrichtung für eine Reifenbearbeitungsmaschine
Agencement de maintien de roues pour machine de traitement de roues

(30) Priority: 25.01.1991 US 645743
(43) Date of publication of application: 29.07.1992
(73) Proprietor: ILLINOIS TOOL WORKS INC., Glenview, Illinois 60025-5811 (US)
(72) Inventor: Folta, Edward J., Anchorville Michigan 48004 (US)
(74) Representative: Rackham, Stephen Neil

(56) References cited:
- EP-A- 0 312 728
- DE-A- 2 616 945
- DE-A- 4 039 701
- US-A- 3 698 233
- US-A- 4 307 797
- US-A- 4 479 381

## Description

The invention relates generally to a quick release automatic tyre holding device for use with a machine for balancing, grading, grinding, or otherwise processing tyres. In the modern assembly line plants, machines that are able to operate at high rates of speed are highly desirable. The faster a machine can operate, the more product that machine can manufacture in a given time period. As the amount of manufactured product per time period increases, revenues due to the sale of those products usually increase accordingly, due to increased supply. This is especially true in the manufacture of fungible goods having limited lifetimes, such as tyres.

In the mass production of tyres for cars, trucks, construction vehicles, and the like, it is necessary to test each tyre manufactured to insure compliance with product specifications, safety of the product, and to maintain a high level of quality control. Many tyres must be graded to aid the consumer in the purchase of tyres. Also, it is necessary to balance each of the tyres to insure proper and even wear of the tread thereon, and to insure that the tyres will provide a smooth ride when installed upon a vehicle. This must be done to each tyre individual because each separate tyre will have different balancing needs due to imperfections in the manufacturing process. Furthermore, many tyres must be ground so that the consumer can receive a product that will serve adequately the needs of that particular consumer.

All of the above processes, among others, can take considerable time because each tyre must be mounted on a device in order for the processes to be performed. The time taken to perform each of these necessary processes can reduce revenues generated by the sale of tyres. Therefore, it is desirable to have a tyre holding fixture that can operate quickly, in order to reduce the time needed to perform the needed processes.

It is well known in the art to provide a device for mounting tyres that has a two part simulated wheel, so that the tyres do not have to be mounted on an actual wheel in order for the processes to take place. Such a device is disclosed, for example, in the following US patents.

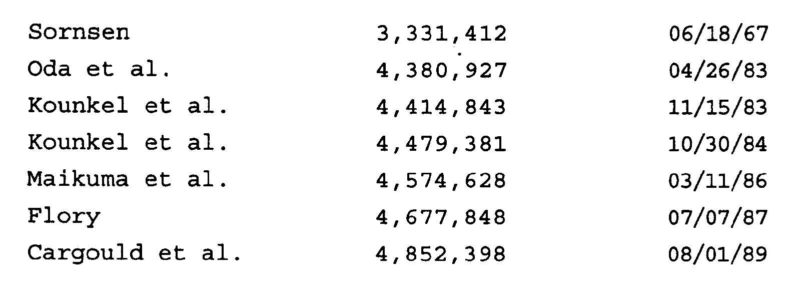

With those devices in mind, manufacturers of tyres have desired to increase the speed of operation of such devices further. This desire has lead to the construction of tyre holding fixtures that have quick release locking mechanisms (US-A-3 698 233). However, in order for such fixtures to actuate quickly, the fixtures often have locking means having certain stress limits. These limits may present an impediment to proper processing of tyres.

Especially in the instance of tyres for trucks and construction vehicles, the tyres must be subjected to high inflation pressures, which often meet or exceed the stress limits of the locking means of the tyre holding fixtures, and which exert a separation force upon the two part simulated wheel, thereby resulting in improper, and inaccurate tyre processing. Therefore, a tyre holding fixture having a quick release locking means, which is able to withstand higher separation forces generated by tyre inflation and processing of the tyres, is desired for use with machines that process tyres.

According to this invention a tyre holding fixture capable of holding a tyre for use with a tyre processing machine comprising a first wheel half support, and a second wheel half support, one of the wheel half supports being translatable between an open and a closed position so as to allow the tyre holding fixture to accept a tyre (B), the wheel half supports forming a simulated wheel when the wheel half support capable of translation is in the closed position, characterised in that projections are disposed about the inner diameter of the first wheel half support and projections are disposed about the outer diameter, both projections being capable of interengagement by rotation of one wheel half suport with respect to the other, and in that each wheel half support includes bores therein of sufficient size to accept locking pins, and in that the projections, bores, and locking pins constitute a quick release locking means capable of joining and releasing the wheel half supports.

Preferably the fixture includes means for varying the width between the two parts of the simulated wheel so that the fixture is capable of mounting tyres of different widths.

A tyre processing machine including the fixture in accordance with this invention has a greater strength and resistance to separation of the two parts of the simulated wheel. The quick releases locking means allows the fixture to be operated automatically at a fast rate of speed. Preferably a cylindrical guide is disposed coaxially with the wheel half supports, and is useful for centering the wheel half supports about a common central axis. The lower wheel half support has no-lead thread segments disposed about its inner diameter, and a lower simulated wheel half coupled about its outer diameter by means of a toothed coupling. The guide extends beyond the upper edge of the lower wheel half support.

There is sufficient space between the guide and the inner diameter of the lower wheel half support to accept the upper wheel half support. The upper wheel half support has an inner diameter large enough to accept the guide therein. The upper wheel half support has no-lead thread segments disposed about its outer diameter. These no-lead thread segments are constructed and disposed so as to be insertable into the no-lead thread segments on the lower wheel half support to form the quick release locking means, known as a bayonet retention system. The upper wheel half support also has a upper simulated wheel half coupled about its outer diameter by means of a toothed coupling.

Both the upper and lower wheel supports have locking bores therein. These locking bores are of sufficient size to accept locking pins. When these locking pins are in place, the upper and lower wheel supports are capable of co-rotation, necessary for proper processing of a tyre.

An example in accordance with this invention will now be described with reference to the accompanying drawings; in which:-
Fig. 1 is an elevational view of a tyre holding fixture in an open position, constructed according to the teachings of the present invention, employed in a tyre processing machine;
Fig. 2 is an elevational view of a tyre holding fixture in a closed position, while holding a tyre, employed in a tyre processing machine;
Fig. 3 is a sectional view of the tyre holding fixture of Fig. 2; and
Fig. 4 is an exploded view of the tyre holding fixture, showing the particular construction of the elements thereof.

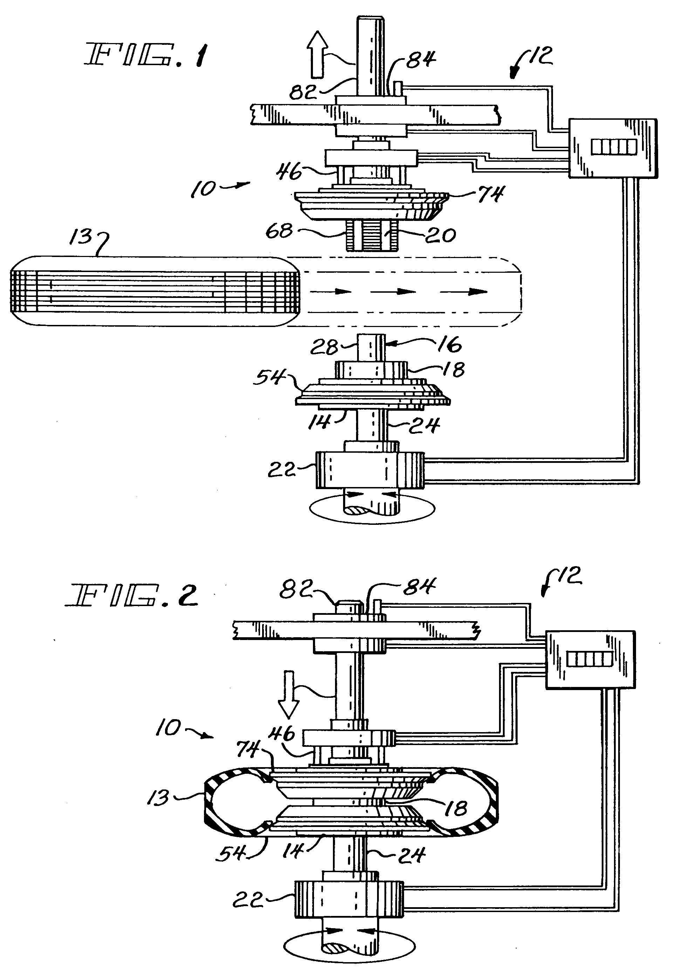

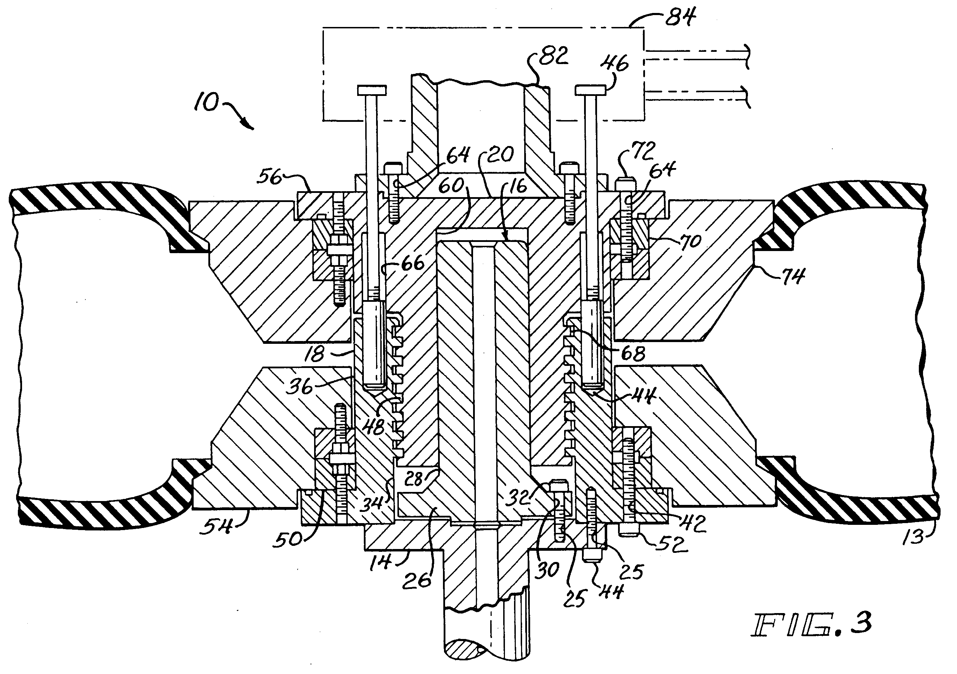

Referring generally to Fig. 1, a tyre holding fixture 10, constructed according to the teachings of the present invention, is disclosed. The tyre holding fixture 10 is just one element of a larger, more complex tyre processing machine 12, partially shown in Fig. 1 and Fig. 2. The tyre processing machine 12 can perform many, various processes upon a production tyre 13, such as balancing, grading, and grinding. The construction and function of the tyre processing machine 12 is well known in the art.

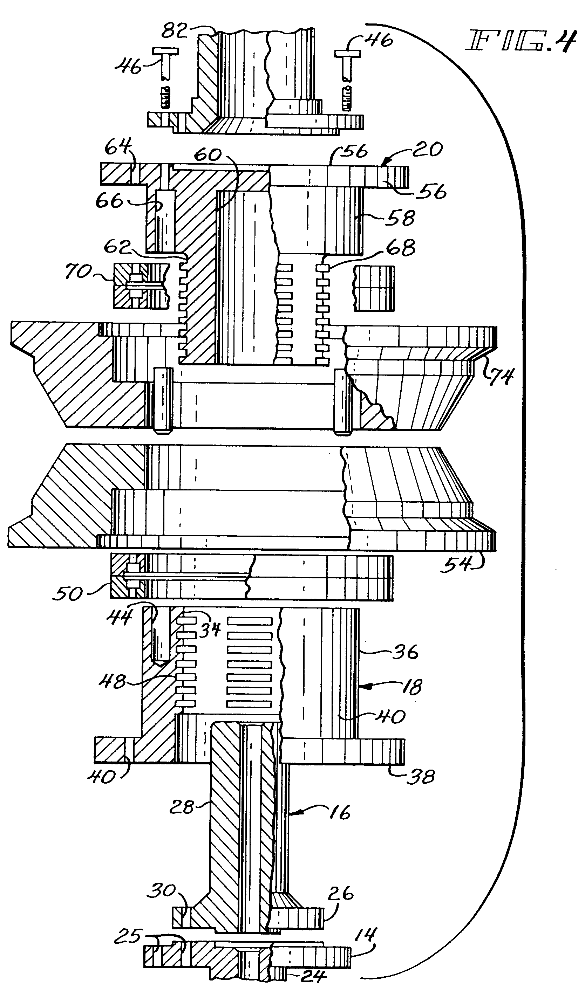

Upon careful consideration of Fig. 1, and Fig. 3, the particular construction of the tyre holding fixture 10 becomes evident. Generally, the tyre holding fixture 10 comprises a spindle 14, a guide 16, a first, or lower, wheel half support 18, and a second, or upper, wheel half support 20. The spindle 14 is connected to a drive means 22, located within the tyre processing. machine 12, by means of a drive shaft 24. In this manner, the drive means 22 is able to cause the entire tyre holding fixture 10 to rotate in order to process a tyre 13. The spindle 14 also has bores 25 therein.

The guide 16 is mounted on the spindle 14 in coaxial fashion. The guide 16 has a mounting portion 26 and an extending portion 28, and is substantially cylindrical in shape. The mounting portion 26 abuts the spindle 14. The mounting portion 26 has apertures 30 of sufficient size to accept mounting bolts 32. The mounting bolts 32 communicate from the apertures 30 in the mounting portion 26 to the bores 25 in the spindle 14, thereby attaching the guide 16 to the spindle 14, so that the guide 16 can rotate in unison with the spindle 14. The extending portion 28 is substantially perpendicular to the mounting portion 26, and extends along the axis of the spindle 14 and the guide 16. The extending portion 28 protrudes beyond the upper edge of the lower wheel half support 18, so that the guide 16 can center the lower and upper wheel half supports 18 and 20 about a common central axis.

The lower wheel half support 18 has an inner diameter 34, an outer diameter 36, a base 38, and a leg 40. The lower wheel half support 18 also has apertures 42, and locking bores 44 therein. The apertures 42 are of sufficient size to accept attaching bolts 44, and the locking bores 44 are of sufficient size to accept locking pins 46, as will be discussed below. The attaching bolts 44 extend from some of the apertures 42 in the lower wheel half support 18 to the bores 25 in the spindle 14, thereby attaching the lower wheel half support 18 to the spindle 14, so that the lower wheel half support 18 can rotate in unison with the spindle 14, and the guide 16. The base 38 abuts the spindle 14, and the leg 40 is substantially perpendicular to the base 38. The lower wheel half support 18 is disposed upon the spindle 14, and about the guide 16 coaxially with the spindle 14, and the guide 16. Thus, the leg 40 is substantially cylindrical in shape.

Axially spaced, annular bands of no-lead thread segments, or radial projections, 48 are disposed upon the inner diameter 34 of the lower wheel half support 18, extending inwardly along the inner diameter 34 towards the guide 16. The no-lead thread segments 48 form part of a quick release locking means, or stepped bayonet retention system, the operation of which will be disclosed herein.

A toothed, quick connect coupling 50, similar in construction to the curved tooth gear coupling disclosed in the patent of Belansky, U.S. Patent No. 4,307,797, assigned to the assignee of the present invention, is disposed about the outer diameter 36 of the lower wheel half support 18. The toothed coupling 50 is mounted on the lower wheel half support 18 by means of mounting bolts 52, which communicate from the toothed coupling 50 to the apertures 42 in the lower wheel half support 18. The toothed coupling 50 supports a lower simulated wheel half 54, which is constructed so as to accept and fix a tyre 13. The structure and operation of the lower simulated wheel half 14 will become more clear herein.

The upper wheel half support 20 forms the remainder of the tyre holding fixture 10. The upper wheel half support 20 has a base 56, a leg 58, an inner diameter 60, and an outer diameter 62. The upper wheel half support 20 also has apertures 64 and locking bores 66 therein. The base 56 is substantially perpendicular to the leg 58, and the leg 58 is substantially cylindrical in shape.

Both the inner diameter 60 and the outer diameter 62 are smaller than the inner diameter 34 of the lower wheel half support 18, and the distance between the guide 16 and the inner diameter 34 of the lower wheel half support 18 is larger than the distance between the outer diameter 62 and the inner diameter 60 of the upper wheel half support 20. With this construction, the leg 58 of the upper wheel half support 20 is insertable within the leg 38 of the lower wheel half support 18.

Axially spaced, annular band of no-lead thread segments, or radial projections, 68 are disposed on the outer diameter 62 of the upper wheel half support 20, extending outwardly along the outer diameter 62. The no lead thread segments 68 are disposed in such a position so as to be insertable into the no-lead thread segments 48 disposed on the inner diameter 34 of the lower wheel half support 18 when the upper wheel half support is inserted into the space between the guide 16 and the inner diameter 34 of the lower wheel half support 18.

Both of the thread segments 48 and 68 are of similar construction, and are not continuous along either the inner diameter 34 or the outer diameter 62 of their respective wheel half supports 18 and 20. Instead, both of the thread segments 48 and 68 are located at alternating 30 degree segments along the circumferences defined by the inner diameter 34 and the outer diameter 62 of the lower and upper wheel half supports 18 and 20, respectively. This construction forms part of the quick release locking means, referred to as a multiple stepped bayonet retention system, including a plurality of interengaging segments spaced along the axis of the tyre holding fixture 10, capable of holding the lower and upper wheel half supports 18 and 20 during the processing of a production tyre 13, as shown in Fig. 2.

A toothed, quick connect coupling 70, similar in construction to the toothed coupling 50, is disposed about the outer diameter 62 of the upper wheel half support 20. The toothed coupling 70 is mounted to the upper wheel half support 20 by means of mounting bolts 72, which communicate from the toothed coupling 70 to the apertures 64 in the upper wheel half support 20. The toothed coupling 70 supports an upper simulated wheel half 74, which is of a construction similar to that of the lower simulated wheel half 54, disposed about the lower simulated wheel half 54.

The locking bores 66 in the upper wheel half support 20 are of similar construction to the locking bores 44 in the lower wheel half support 18, and are designed to accept locking pins 46. The locking bores 44 and 66 are disposed about their respective wheel half supports 18 and 20 in positions so that the locking pins 46 can be inserted in, and extend through both sets of locking bores 44 and 66, so that the lower and upper wheel half supports 18 and 20 can be joined, allowing for their co-rotation during the processing of a tyre 13. In the preferred construction, the locking pins 46, and locking bores 44 and 66 form part of the quick release locking means.

Together, the lower simulated wheel half 54 and the upper simulated wheel half 74 form an apparatus which is able to hold a production tyre 13 for processing by the tyre processing machine 12. Specifically, the lower simulated wheel half 54 has a bevelled surface 76, which is the mirror image of a bevelled surface 78 on the upper simulated wheel half 74. Both of the bevelled surfaces 76 and 78 are constructed so as to imitate the mounting surface of an actual wheel. The bevelled surfaces 76 and 78, when in the proper relative positions dictated by the width of the production tyre 13, mimic the action of an actual wheel, and allow a tyre 13 to be balanced, graded, ground, or otherwise processed as if the tyre 13 were actually mounted on a wheel.

As stated above, the tyre holding fixture 10 is but part of a larger tyre processing machine 12, well known in the art. The connections between the tyre holding fixture 10 and the tyre processing machine 12 are shown partially in Fig. 1, and Fig. 2. The tyre processing machine 12, preferably, is hydraulic in nature, and is driven by hydraulic forces generated by a hydraulic power source 80.

The spindle 14 is connected to the drive means 22, located within the tyre processing machine 12, by means of the drive shaft 24. In this manner, the drive means 22 is able to cause the entire tyre holding fixture 10 to rotate when the locking pins 46 are disposed within both sets of locking bores 44 and 66, thereby locking the two wheel half supports 18 and 20 together. The upper wheel half support 20 is connected to drive means 82, such as a hydraulic piston, or the like, which is capable of translating the upper wheel half support 20 between an open position, as shown in Fig. 1, and a closed position, as shown in Fig. 2, so that the tyre holding fixture 10 can accept a tyre 13. The drive means 82 also allows the upper wheel half support to rotate in unison with the lower wheel half support 18. Another drive means 84, such as a piston, or the like, is connected to the locking pins 46. This drive means 84 is capable of translating the locking pins 46 into, and out of the locking bores 44 and 66, so that the two wheel half supports 18 and 20 are capable of co-rotation, and the two wheel half supports 18 and 20 are kept in a locked disposition.

The operation of the tyre holding fixture 10 will become more clear from the following discussion. Referring initially to Fig. 1, the tyre holding fixture 10 is in the open position, ready to accept a tyre 13 for processing. A tyre 13 is placed above the lower wheel half support 18, and then is guided down into engagement with the bevelled surface 76 of the lower simulated wheel half 54.

With the tyre 13 engaging the bevelled surface 76, the drive means 82 forces the upper wheel half support 20 downward, inserting the leg 58 of the upper wheel half support 20 into the space between the guide 16 and the inner diameter 34 of the lower wheel half support 18. The guide 16 insures that the lower and upper wheel half supports 18 and 20 are centered about a common central axis, thereby insuring that the tyre 13 is centered about the tyre holding fixture 10.

At this time the no-lead thread segments 48 and 68 are rotated 30 degrees with respect to each other, and thus, are not interengaged. The upper wheel half support 20 is forced downward a specific distance dictated by the width of the tyre 13, until the tyre 13 engages the bevelled surface 78 of the upper simulated wheel half 74. When this occurs, the simulated wheel halves 54 and 74 act as an actual wheel, and the tyre 13 behaves as if it were mounted on an actual wheel.

When the upper wheel half support 20 has been forced into the proper disposition by the drive means 82, the drive means 22 applies a rotational force to the drive shaft 24, causing the lower wheel half support to rotate 30 degrees with respect to the upper wheel half support 20. This brings the no-lead thread segments 48 and 68 into interengagement, completing the quick release locking means, thereby preventing the wheel support halves 18 and 20 from being separated by forces inherent in the processing of tyres, such as tyre inflation generated forces. Also, that 30 degree rotation brings the locking bores 44 and 66 into disposition along a common axis of elongation. Because the no-lead thread segments 48 and 68 are multi-stepped, the tyre holding fixture 10 can accept and hold firmly tyres of varying widths for processing.

At this point, the drive means 84 forces the locking pins 46 through the locking bores 66 in the upper wheel half support 20, and into the locking bores 44 in the lower wheel half support 18. The tyre holding fixture 10 is now in the closed position, shown in Fig. 2. In this manner, the lower and upper wheel half supports 18 and 20 are joined further, so that the tyre holding fixture 10 can rotate under the influence of rotational forces generated by the drive means 22, which are communicated to the tyre holding fixture 10 by means of the drive shaft 24, which is connected to the spindle 14.

When the tyre 13 has been processed properly, the drive means 22 ceases its rotation, bringing the tyre holding fixture 10 to rest. The drive means 84 now retracts the locking pins 46 out of the locking bores 44 in the lower wheel half support 18 a distance sufficient to allow the rotation of the lower wheel half support 18 with respect to the upper wheel half support 20. The drive means 22 then rotates the lower wheel half support 18 30 degrees, so as to disengage the no-lead thread segments 48 and 68. The drive means 82 causes the upper wheel half support 20 to translate upwards, relieving the engagement between the tyre 13 and the bevelled surface 78 of the upper simulated wheel half 74. The upper wheel half support 20 translates upward into the open position, shown in Fig. 1, and the tyre 13 is removed from the tyre holding fixture 10, which now is ready to process another tyre.

It must be emphasized that this entire process in automatic, requiring no human control, thereby increasing the speed of the process. The quick release locking means employed by the present invention allows a significant decrease in the amount of time needed to process each production tyre 13. That means also allows a factory to have necessary versatility with respect to its machines. Specifically, because the quick release locking means is multi-stepped, the tyre holding fixture 10 can hold tyres of varying widths, thereby reducing the number of machines needed to service the production of different width tyres. Furthermore, the tyre holding fixture 10 can withstand separation forces, generated by tyre inflation and processing, on the order of 500,000 pounds (3.5GPa), thereby making the present invention a needed asset in the processing of tyres, especially tyres for trucks. These benefits of the tyre holding fixture 10 of the present invention can lead to increased production of tyres, and increased revenues from the sale of those tyres.

## Claims

1. A tyre holding fixture capable of holding a tyre for use with a tyre processing machine (12) comprising a first wheel half support (18), and a second wheel half support (20), one of the wheel half supports being translatable between an open and a closed position so as to allow the tyre holding fixture to accept a tyre (B), the wheel half supports (18,20) forming a simulated wheel when the wheel half support (18) capable of translation is in the closed position, characterised in that projections (48) are disposed about the inner diameter of the first wheel half support and projections (68) are disposed about the outer diameter, both projections (48,68) being capable of interengagement by rotation of one wheel half support (18) with respect to the other (20), and in that each wheel half support includes bores (66) therein of sufficient size to accept locking pins (46), and in that the projections (48,68), bores (66), and locking pins (46) constitute a quick release locking means capable of joining and releasing the wheel half supports (18,20).

2. A tyre holding fixture according to claim 1, wherein a cylindrical guide (34) is disposed coaxially with respect to one of the wheel half supports (18) so that the guide is capable of centering the wheel half supports (18,20) about a common axis.

3. A tyre holding fixture according to claim 1 or 2, wherein the projections (48,68) are multiple no-lead thread segments.

4. A tyre holding fixture according to any one of the preceding claims, wherein the projections (48,68) are noncontinuous, and spaced along circumferences defined by their respective diameters.

5. A tyre holding fixture as defined in claim 4, wherein the projections (48,68) are constructed in such a manner so that they can be brought into and out of interengagement by rotating one of the wheel half supports (18,20).

6. A tyre holding fixture as defined in claim 4 or 5, wherein the projections (48,68) are spaced along circumferences defined by their respective diameters in alternating 30 degree segments.

7. A tyre holding fixture according to any one of the preceding claims, wherein one of the wheel half supports (18) is connected to a spindle (24), the spindle (24) being capable of rotation, so that one or both wheel half supports (18,20) can be rotated, depending on the disposition of the quick release locking means.

8. A tyre holding fixture as defined in any one of the preceding claims, wherein the locking pins (46) translate under the influence of a drive means (84).

9. A tyre holding fixture according to any one of the preceding claims, wherein simulated wheel halves (54,74) are disposed about the wheel half supports (18,20), the simulated wheel halves (54,74) having bevelled surfaces constructed so as to mimic the construction of an actual wheel.

## Patentansprüche

1. Eine Reifenhaltevorrichtung, welche in der Lage ist, einen Reifen zu halten zur Anwendung bei einer Reifenbearbeitungsmaschine (12), enthaltend einen ersten Radhälftenträger (18) und einen zweiten Radhälftenträger (20), wobei einer der Radhälftenträger zwischen einer offenen und einer geschlossenen Position verschiebbar ist, um es der Reifenhaltevorrichtung zu erlauben einen Reifen (B) aufzunehmen, wobei die Radhälftenträger (18, 20) ein simuliertes Rad bilden, wenn der Radhälftenträger (18), welcher zu Verschiebung fähig ist, in der geschlossenen Position ist, dadurch gekennzeichnet, daß Vorsprünge (48) um den inneren Durchmesser des ersten Radhälftenträgers angeordnet sind und daß Vorsprünge (68) um den äußeren Durchmesser angeordnet sind, wobei beide Vorsprünge (48, 68) durch Drehung eines Radhälftenträgers (18) mit Bezug auf den anderen (20) zum gegenseitigen Eingriff in der Lage sind, und daß jeder Radhälftenträger Bohrungen (66) von ausreichender Größe darin enthält, um Verschlußstifte (46) aufzunehmen, und daß die Vorsprünge (48, 68), Bohrungen (66) und Verschlußstifte (46) ein Schnellverschlußmittel darstellen, welches in der Lage ist, die Radhälftenträger (18, 20) zu verbinden und zu lösen.

2. Eine Reifenhaltevorrichtung nach Anspruch 1, worin eine zylindrische Führung (34) koaxial mit Bezug auf einen der Radhälftenträger (18) so angeordnet ist, daß die Führung in der Lage ist, die Radhälftenträger (18, 20) um eine gemeinsame Achse zu zentrieren.

3. Eine Reifenhaltevorrichtung nach Anspruch 1 oder 2, worin die Vorsprünge (48, 68) mehrteilige nichtführende Gewindesegmente sind.

4. Eine Reifenhaltevorrichtung nach einem der vorhergehenden Ansprüche, worin die Vorsprünge (48, 68) nicht durchgehend sind und entlang Umfangsflächen, welche durch ihre jeweiligen Durchmesser definiert sind, mit Abständen angeordnet sind.

5. Eine Reifenhaltevorrichtung nach Anspruch 4, worin die Vorsprünge (48, 68) so konstruiert sind, daß sie durch Drehung eines der Radhälftenträger (18, 20) in und aus gegenseitigem Eingriff heraus gebracht werden können.

6. Eine Reifenhaltevorrichtung nach Anspruch 4 oder 5, worin die Vorsprünge (48, 68) entlang Umfangsflächen, welche durch ihre jeweiligen Durchmesser definiert sind, mit Abständen in abwechselnden 30-Grad-Segmenten angeordnet sind.

7. Eine Reifenhaltevorrichtung nach einem der vorhergehenden Ansprüche, worin einer der Radhälftenträger (18) mit einer Spindel (24) verbunden ist, wobei die Spindel (24) zur Rotation fähig ist, so daß ein oder beide Radhälftenträger (18, 20) gedreht werden können, abhängig von der Anordnung des Schnellverschlußmittels.

8. Eine Reifenhaltevorrichtung nach einem der vorhergehenden Ansprüche, worin die Verschlußstifte (46) sich unter dem Einfluß eines Antriebsmittel (84) verschieben.

9. Eine Reifenhaltevorrichtung nach einem der vorhergehenden Ansprüche, worin simulierte Radhälften (54, 74) um die Radhälftenträger (18, 20) angeordnet sind, wobei die simulierten Radhälften (54, 74) abgeschrägte Oberflächen haben, welche so konstruiert sind, daß sie die Konstruktion eines tatsächlichen Rades nachahmen.

## Revendications

1. Montage fixe de maintien d'un pneu capable de maintenir un pneu destiné à être utilisé sur une machine (12) de traitement de pneus, comprenant un premier support (18) de demi-roue et un second support (20) de demi-roue, l'un des supports de demi-roue étant mobile en translation entre une position ouverte et une position fermée, de manière à permettre au montage fixe de maintien d'accepter un pneu (B), les supports (18, 20) des demi-roues formant une fausse roue lorsque le support (18) de demi-roue capable de se déplacer en translation se trouve en position de fermeture,
caractérisé en ce que des saillies (48) sont disposées autour du diamètre intérieur du premier support de demi-roue, et des saillies (68) sont disposées autour du diamètre extérieur, les saillies (46, 68) pouvant être engagées les unes dans les autres par rotation de l'un des supports (18) de demi-roue par rapport à l'autre (20), et en ce que chaque support de demi-roue comprend des trous (66) ménagés dans celui-ci, présentant une taille suffisante pour recevoir des goujons de verrouillage (46), et en ce que les saillies (48, 68), les trous (66) et les goujons de verrouillage (46) constituent un moyen de verrouillage à ouverture rapide permettant de joindre et de relâcher les supports (18, 20) des demi-roues.

2. Montage fixe de maintien d'un pneu selon la revendication 1, dans lequel un guide cylindrique (34) est disposé coaxialement par rapport à l'un des supports (18) de demi-roue, de manière que le guide soit capable de centrer les supports (18, 20) des demi-roues autour d'un axe commun.

3. Montage fixe de maintien d'un pneu selon la revendication 1 ou 2, dans lequel les saillies (48, 68) sont des segments de spires multiples sans avance.

4. Montage fixe de maintien d'un pneu selon l'une quelconque des revendications précédentes, dans lequel les saillies (48, 68) sont discontinues et sont espacées selon les circonférences définies par leurs diamètres respectifs.

5. Montage fixe de maintien d'un pneu selon la revendication 4, dans lequel les saillies (48, 68) sont configurées de manière telle qu'elles puissent être amenées en engagement mutuel et désengagées les unes des autres en faisant tourner l'un des supports (18, 20) de demi-roue.

6. Montage fixe de maintien d'un pneu selon la revendication 4 ou 5, dans lequel les saillies (48, 68) sont espacées selon les circonférences définies par leurs diamètres respectifs, dans des segments alternatifs de 30 degrés.

7. Montage fixe de maintien d'un pneu selon l'une quelconque des revendications précédentes, dans lequel l'un des supports (18) de demi-roue est relié à une broche (24), la broche (24) pouvant tourner de manière que l'un des deux supports (18, 20) des demi-roues, ou les deux supports, puissent être mis en rotation, suivant la position des moyens de verrouillage à ouverture rapide.

8. Montage fixe de maintien d'un pneu selon l'une quelconque des revendications précédentes, dans lequel les goujons de verrouillage (46) se déplacent en translation sous l'action d'un moyen d'entraînement (84).

9. Montage fixe de maintien d'un pneu selon l'une quelconque des revendications précédentes, dans lequel de fausses demi-roues (54, 74) sont disposées autour des supports (18, 20) des demi-roues, les fausses demi-roues (54, 74) présentant des surfaces coniques conçues de manière à imiter la conception d'une roue réelle.
